# EUROPÄISCHE PATENTSCHRIFT

(11) **EP 0 405 251 B1**
(45) Veröffentlichungstag und Bekanntmachung des Hinweises auf die Patenterteilung: **25.05.1994**
(21) Anmeldenummer: 90111320.9
(22) Anmeldetag: 15.06.1990
(51) Int. Cl.: G05B 19/18

(54) **Koordinatenbohrmaschine zum Zentrieren**
Coordinate drilling machine for centering
Machine à percer à coordonnées pour le centrage

(30) Priorität: 30.06.1989 DE 3921547
(43) Veröffentlichungstag der Anmeldung: 02.01.1991
(73) Patentinhaber: Stork, Gerold, 91413 Neustadt a.d. Aisch (DE)
(72) Erfinder: Stork, Gerold, 91413 Neustadt a.d. Aisch (DE)
(74) Vertreter: Böhme, Volker, Dipl.-Ing.

(56) Entgegenhaltungen:
- EP-A- 0 065 918
- FR-A- 2 335 303
- US-A- 3 077 799

## Beschreibung

Die Erfindung betrifft eine Koordinatenbohrmaschine zum Zentrieren, bei der ein Spindelstock und eine Aufspannplatte mittels X-Führungsschienen sowie eines X-Antriebes und Y-Führungsschienen sowie einer Y-Antriebes in X-Richtung sowie in Y-Richtung gegeneinander verschiebbar sind, bei der die Aufspannplatte von den Führungsschienen getragen ist, wobei diese unter der Aufspannplatte bei einem diese lagernden Maschinengestell angeordnet sind, bei der im Spindelstock ein Bohrfutter aufgenommen ist und der Spindelstock über einen Spindelstockschlitten an einem an dem Maschinengestell angebrachten Ständer mittels Z-Führungsschienen sowie eines Z-Antriebes auf und ab bewegbar ist, bei der den Antrieben am Maschinengestell vorgesehene Handräder zugeordnet sind und bei der vorgesehen sind eine Steuereinrichtung, Überwachungseinrichtungen mit Endschaltern zur Überwachung der Positionen von Aufspannplatte und Spindelstock, eine Tasteneinrichtung und ein Massenspeicher zum Laden und Speichern von Datenmengen.

Eine primär nur zum Zentrieren gedachte Koordinatenbohrmaschine, d.h. eine Anbohrmaschine unterscheidet sich von einer normalen Bohrmaschine, einer "Arbeits"-Bohrmaschine durch die Leistung. Die Anbohrmaschine ist eine Zentriermaschine bzw. eine primär nur zum Zentrieren gedachte Koordinatenbohrmaschine. Sie entlastet die kapitalintensive Arbeits-Bohrmaschine von Zentrier- und Anbohrarbeiten. Bei einer bekannten (Prospekt KB 5.6 haßler) Anbohrmaschine ist die Aufspannplatte unmittelbar vom Maschinengestell getragen. Die Y-Führungsschienen sind seitlich neben der Aufspannplatte am Maschinengestell vorgesehen und die X-Führungsschienen sind brückenartig oberhalb der Aufspannplatte angeordnet. Der Spindelstock ist entlang den brückenartigen X-Führungsschienen verschiebbar und die Aufspannplatte ist mit einer Gruppe von zueinander parallelen T-Nuten versehen. Die Nutzungsmöglichkeiten dieser Anbohrmaschine sind beschränkt. Wegen der Gruppe der T-Nuten ist die Nullpunktfeststellung für ein eingepanntes Werkstück zeitaufwendig. Die Höhe der bearbeitbaren Werkstücke ist durch den Handhubweg und die Brückenhöhe begrenzt. Die Brücke begrenzt auch die Ausdehnung des bearbeitbaren Werkstückes in X-Richtung. Die Bedienungsperson muß dem Werkstück zu jeder neu eingestellten Position folgen, insbesondere wenn die neu eingestellte Position von der Vorderseite des Maschinengestelles weit entfernt ist.

Es ist eine Koordinatenbohrmaschine der eingangs genannten Art bekannt (US-PS 31 09 329), die beim Zentrieren vereinfachte Benutzung und vermehrte Benutzungsmöglichkeiten bietet. Diese bekannte Koordinatenbohrmaschine ist jedoch zum Anbohren nur schlecht geeignet, weil sie als Arbeitsbohrmaschine ausgelegt ist, zum Anbohren überdimensioniert ist und damit beim Anbohren unwirtschaftlich arbeitet. Auch ist die Aufspannplatte mit einer Gruppe von zueinander parallelen T-Nuten versehen, was die Nullpunktfeststellung für ein eingespanntes Werkstück zeitaufwendig macht und eine weitere Unwirtschaftlichkeit bei Benutzung zum Anbohren darstellt. Weiterhin ist der Spindelstock über einen Bohrschlitten an dem Ständer wahlweise mittels Handrad und mittels Antrieb auf und ab bewegbar. Es ist umständlich und zeitaufwendig und somit ebenfalls unwirtschaftlich, zum Anbohren den gesamten Spindelkopf mittels des Handrades auf und ab zu bewegen. Die den drei Antrieben zugeordneten Handräder sind Verstell-Handräder, die dazu dienen, die Aufspannplatte manuell in X- und Y-Richtung und den Spindelstock maschinell in Z-Richtung zu verstellen. Dieses Verstellen von Hand ist zeitaufwendig und damit unwirtschaftlich. Dies ist besonders bei einer Koordinatenbohrmaschine bedeutsam, die nur zum Zentrieren bzw. Anbohren verwendet werden soll, da es hier darum geht, ständig neue, nicht einprogrammierte Positionen anzufahren. Wenn man dies, wie bei der bekannten Koordinatenbohrmaschine, jedesmal nur mittels Hand und Auge durchführt, liegt eine unwirtschaftliche Betriebsweise der Bohrmaschine vor. Die Aufspannplatte besteht aus Stahl. Gerade an die Aufspannplatte einer Anbohrmaschine werden hohe Forderungen hinsichtlich Dämpfung und Dimensionsstabilität gestellt. Eine solche Stahlplatte ist schwer und läßt sich nur unter erhöhtem Energieaufwand schnell verschieben. Die Stahlplatte ist, wenn man sie wirtschaftlich akzeptabel herstellt, ungenau und für langsamere Betriebsweise verantwortlich. Bei der bekannten Koordinatenbohrmaschine der eingangs genannten Art ist eine mechanisch-elektrische Betriebsweise vorgesehen und lassen sich Anbohrvorgänge, wenn überhaupt, nur höchst langsam durchführen.

Aufgabe der Erindung ist es, eine Koordinatenbohrmaschine der eingangs genannten Art im Hinblick auf das Zentrieren auf wirtschaftlich einfache Art so zu verbessern, daß Werkstücke in einem Raster an jedem beliebigen Rasterpunkt definiert gespannt werden können. Die erfindungsgemäße Koordinatenbohrmaschine ist, diese Aufgabe lösend, dadurch gekennzeichnet, daß das Bohrfutter relativ zum Spindelstock mittels eines Handhebels auf und ab verstellbar ist, daß auf der Aufspannplatte eine Rasterung von gleichen Abständen voneinander aufweisenden Reihen von Aufnahmebohrungen für eine Nullpunktfeststellung vorgesehen ist, daß die Steuer- und Überwachungseinrichtung als Rechner mit einem Prozessor ausgebildet ist und die Handräder elektronische Handräder für den X-Antrieb und den Y-Antrieb und gegebenenfalls für den Z-Antrieb sind, deren Vorgabewerte im Rechner verarbeitet werden, und daß der Rechner derart ausgebildet und programmiert ist, daß mittels der elektronischen Handräder die Rasteraufspannplatte und der Spindelstock in Bezug auf einen am Spindelstock vorgesehenen Taster bis zum Anschlag an einem Spannmittel, Anschlagmittel oder Werkstück verfahrbar sind und dem Rechner diese Position als relativer Nullpunkt des Spannmittels, Anschlagmittels bzw. Werkstückes lehrbar ist, und daß er nach Eingabe der Art des Spannmittels, Anschlagmittels bzw. Werkstückes und des zugeordneten Referenzloches der Rasteraufspannplatte den entsprechenden relativen Nullpunkt weiß und nach Eingabe der Koordinaten der gewünschten Zentrierbohrung in Bezug auf den relativen Nullpunkt die Rasteraufspannplatte relativ zum Spindelstock verfährt.

Die erfindungsgemäße Koordinatenbohrmaschine weist zum Anbohren größtmögliche Bedienfreundlichkeit auf und erlaubt das Zentrieren und Anbohren jeden Werkstückes mit geringstmöglichen Neben- und Hauptzeiten. Da der Spindelstock in der X- und Y-Achse feststeht, hat er zur Bedienungsperson stets im wesentlichen die gleiche Stellung. Aufgrund der Antriebsverstellbarkeit in Z-Richtung und der X-Y-Verstellbarkeit der Rasteraufspannplatte sind konstruktive Beschränkungen der Werkstückgröße beim Anbohren entfallen. Der Einsatz der Bohrungs-Reihen-Rasterung für das Anbohren unmittelbar an dem Maschinentisch spart Bauhöhe und vereinfacht die Nullpunktfeststellung für ein eingespanntes Werkstück; dabei ist der gelochten Rasterspannplatte in an sicn bekannter Weise ein Satz von Anschlagmitteln, z.B. Winkeln, und Spannhilfsmitteln, z.B. Schraubstöcke, zugeordnet, die mit Zapfen in die Bohrungen steckbar sind. Die zusätzliche Handverstellmöglichkeit des Bohrfutters ist wesentlich für die erfindungsgemäße Koordinatenbohrmaschine. Die Erfindung übernimmt vorteilhafte konstruktive Gestaltungen von einer herkömmlichen Arbeitsbohrmaschine auf eine Anbohrmaschine, um in Kombination mit zusätzlichen Merkmalen eine merkliche bzw. erhebliche Beschleunigung sowie Genauigkeitsverbesserung des Anbohrens zu erreichen. Die Anschaffung einer gesonderten Anbohrmaschine zusätzlich zu Arbeitsbohrmaschinen ist wirtschaftlich erst dann vertretbar, wenn eine erhebliche Beschleunigung bzw. Vereinfachung genauerer Anbohrvorgänge erreicht ist. Die Kombination von zusätzlicher Handhebelverstellung des Bohrfutters, Aufnahmebohrungen, elektronischen Handrädern und rechnergesteuertem Betrieb bringt diese erhebliche Beschleunigung bzw. Vereinfachung sowie Genauigkeitsverbesserung der Arbeitsvorgänge.

Mit den elektronischen Handrädern läßt sich die Rasteraufspannplatte und gegebenenfalls der Spindelstock rasch von Hand auf eine gewünschte Stellung fahren. Die Koordinatenbohrmaschine ist in der Regel versehen mit einer Steuereinrichtung, die den Rechner und einen Prozessor pro Achse umfaßt, mit Überwachungseinrichtungen, die End- und Überfahrschalter zur Überwachung von Rasteraufspannplatte - und Spindelstockposition und optoelektronische Drehgeber zur Überwachung von Schrittmotoren umfaßt, mit einer Tasteneinrichtung, die eine Tastatur zum manuellen Eingeben von Daten, Taster für Eilvorschub, Taster zur Beendigung eines Bohrvorganges, Taster zur Bohrfutterdrehzahl-Verstellung und Taster zur Höhenverstellung des Spindelstockes umfaßt, mit Massenspeicher, z.B. einem Diskettenlaufwerk, zum Laden und Speichern von Datenmengen und mit einem Bildschirm zur Anzeige. Die erfindungsgemäße Koordinatenbohrmaschine ist für einen rechnergesteuerten Betrieb gut geeignet. Die über die Tasteneinrichtung und den Massenspeicher oder Server eingegebenen Daten werden automatisch abgearbeitet.

Bei Benutzung der erfindungsgemäßen Koordinatenbohrmaschine wird das jeweilige Anschlagmittel, Spannmittel bzw. Werkstück bestimmt und in den Rechner eingegeben. Es wird ein durch die X- und Y-Koordinaten bestimmtes Loch der Rasteraufspannplatte, das Referenzloch, eingegeben. Die Maschine hat einen dem Rechner bekannten Maschinen-Nullpunkt, in Bezug auf den sie das jeweilige Referenzloch berechnet. Dem Referenzloch ist ein Nullpunkt des Anschlagmittels, Spannmittels bzw. Werkstückes zugeordnet. Die Koordinaten der gewünschten Zentrierbohrung in Bezug auf den Nullpunkt des Spannmittels u.a. werden eingegeben. Die Rasteraufspannplatte fährt auf ein Startsignal hin so, daß die zu zentrierende Stelle unter den Bohrer kommt. Die elektronischen Handräder sind Lehrmittel, um dem Rechner zu zeigen, wo der relative Nullpunkt des Spannmittels u.a. liegt, sie sind zum Antasten an den Nullpunkt da. Im Bohrfutter ist statt eines Bohrers der Taster vorgesehen, der dem Anschlagen dient.

Die Angabe Spannmittel wird hier häufig auch stellvertretend für Anschlagmittel und Werkstück verwendet. Das Spannmittel hat häufig zwei und ggf. auch mehr Zapfen, wobei der Rechner dann mit entsprechend zwei oder ggf. mehr Referenzlöchern der Rasteraufspannplatte zu rechnen hat. Die Anordnung bzw. Verteilung der Aufnahmebohrungen der Rasteraufspannplatte ist dadurch definiert, daß der Rechner von jeder Aufnahmebohrung einen Namen und zugeordnete X- und Y-Koordinaten in Bezug auf den Maschinen-Nullpunkt weiß. Die durch die Erfindung erreichte Beschleunigung des Arbeitens kommt u.a. daher, daß der Rechner die Nullpunkte der verschiedenen Spannmittel lernt. Das elektronische Handrad verschiebt die Rasteraufspannplatte nicht aufgrund mechanischer Kraftübertragung, sondern aufgrund einer gesteuerten motorischen Kraftübertragung bzw. einer elektromechanischen Übersetzung, d.h. es arbeitet auf einen Stellantrieb. Das elektronische Handrad ist z.B. ein Inkrementaldrehgeber mit zwei Kreisen, die dem Links- oder Rechtsherumdrehen bzw. dem Vor- oder Rückwärtsfahren zugeordnet sind.

Besonders zweckmäßig und vorteilhaft ist es, wenn die Rasteraufspannplatte einen Mineralguß-Korpus umfaßt, der als nach unten offene Wanne ausgebildet ist und in den oben eine Stahlplattenschicht aufgelegt ist. Diese Rasteraufspannplatte ist im Hinblick auf die Gesamtmaschine möglichst dämpfend und weist konstante Außenabmessungen auf. Die Platte ist biegesteif und trotz der vielen Bohrungen in der Herstellung preiswert. Dies alles ist bei einer Rasteraufspannplatte aus Stahl nicht in einem befriedigenden Umfang gegeben. Geeigneter Mineralguß ist z.B. durch den Prospekt "ACO SYNTOLIT Mineralguß für den Maschinenbau" bekannt. In der Regel wird ein Werkstofftyp verwendet, der auf Epoxidharzbasis mineralich hochgefüllt ist und mit "ACO SYNTOLITE 8000 ff." bezeichnet ist.

Besonders zweckmäßig und vorteilhaft ist es sodann, wenn der maximale Hub des Spindelstockschlittens am Ständer größer ist als der maximale Hub des Bohrfutters am Spindelstock. Dies verdeutlicht, in welchem Umfang die Höhe der zu bearbeitenden Werkstücke sich von Werkstück zu Werkstück ändern kann.

Besonders zweckmäßig und vorteilhaft ist es weiterhin, wenn eine mit dem einen Antrieb versehene Spindel unten an der Rasteraufspannplatte gelagert ist und einen mit einer Mutter versehenen Kreuzkopf trägt, der über eine Mutter von einer zur ersten Spindel rechtwinkeligen, mit dem anderen Antrieb versehenen Spindel getragen ist, die am Gestell gelagert ist. Hierbei sind die Führungsschienen und die Antriebe in einfacher Weise unter der Rasteraufspannplatte angeordnet.

Besonders zweckmäßig und vorteilhaft ist es ebenso, wenn pro Aufnahmebohrung eine Aufnahme-Hülse, die in die Stahlplattenschicht seitlich eingreift, in dem Mineralguß-Korpus mit einem Außengewinde in ein Mutterstück geschraubt ist, das in den Mineralguß-Korpus seitlich eingreift. Die Stahlplattenschicht ist mittels der Aufnahme-Hülsen und der Mutterstücke an dem Mineralguß-Korpus in einfacher Weise sicher gehalten.

Besonders zweckmäßig und vorteilhaft ist es, wenn die Rasteraufspannplatte an der Unterseite Halteleisten trägt, die an dem Mineralguß-Korpus mittels Ankerstücken festgelegt sind, die mit Gewindebohrungen versehen sind. Dies erleichert die Verbindung der X- und Y-Führungsschienen mit der Rasteraufspannplatte.

Wenn der Ständer mittig an einer Längsseite des Maschinengestelles angeordnet ist, ist es vereinfacht, jede Stelle der Rasteraufspannplatte unter das Bohrfutter zu bringen. Wenn die Länge der Rasteraufspannplatte kleiner als 3/4 der Länge des Verschiebebereiches des Maschinengestelles ist und die Breite der Rasteraufspannplatte kleiner als 3/4 der Breite des Verschiebebereiches des Maschinengestelles ist, so ist hierdurch die Größe der X-Y-Verschiebewege der Rasteraufspannplatte verdeutlicht.

In der Zeichnung ist eine bevorzugte Ausführungsform der Erfindung dargestellt und zeigt
- Fig. 1: ein perspektivische, vereinfachte Ansicht einer Koordinatenbohrmaschine,
- Fig. 2: ein elektrisches Schaltschema der Koordinatenbohrmaschine gemäß Fig. 1,
- Fig. 3: eine Draufsicht auf eine Rasteraufspannplatte der Koordinatenbohrmaschine gemäß Fig. 1,
- Fig. 4: eine Unteransicht der Rasteraufspannplatte gemäß Fig. 3,
- Fig. 5: einen Längsschnitt gemäß Linie V - V in Fig. 4,
- Fig. 6: einen Querschnitt gemäß Linie VI - VI in Fig. 5,
- Fig. 7: einen Querschnitt gemäß Linie VII - VII in Fig. 5,
- Fig. 8: einen Querschnitt einer Einrichtung zwischen der Rasteraufspannplatte und einem Maschinengestell der Koordinatenbohrmaschine gemäß Fig. 1,
- Fig. 9: einen Längsschnitt der Einrichtung gemäß Fig. 8 und
- Fig. 10: einen Schnitt eines Teiles mit Bohreinrichtung versehenen Ständers der Koordinatenbohrmaschine gemäß Fig. 1.

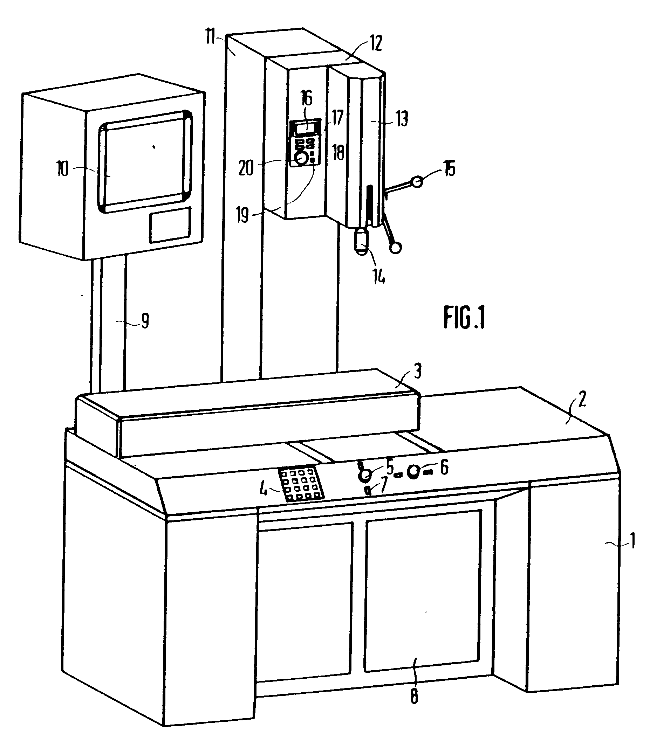

Die Koordinatenbohrmaschine gemäß Zeichnung besitzt gemäß Fig. 1 ein gehäuseartiges Maschinengestell 1, das an der Oberseite einen ebenen, rechteckigen Verschiebebereich 2 bildet, auf dem sich eine Rasteraufspannplatte 3 befindet. Das Gestell 1 ist mit einer Tastatur 4 zum manuellen Eingeben von Daten, zwei elektronischen Handrädern 5, 6 für einen X-Antrieb und einen Y-Antrieb und paarweisen Vorwärts- bzw. Rückwärts-Tastern 7 für Eilvorschub versehen, die im Bereich eines Bedienungsplatzes 8 liegen. Auf der dem Bedienungsplatz 8 gegenüberliegenden Längsseite des Gestelles 1 ist nahe einem Gestellende auf einer Stütze 9 erhöht über der Rasteraufspannplatte 3 ein Bildschirm 10 zur Anzeige vorgesehen. An der dem Bedienungsplatz 8 gegenüberliegenden Seite des Gestelles 1 ist mittig ein Ständer 11 vorgesehen, an dem ein Spindelstockschlitten 12 auf und ab verschiebbar gelagert ist, der einen Spindelstock 13 trägt, an dem ein Bohrfutter 14 auf und ab verstellbar gelagert ist, das zur Aufnahme eines nicht gezeigten Bohrers zum Anbohren geeignet ist und mittels drehbaren Handhebels 15 von Hand auf und ab verstellt wird.

Am Spindelstockschlitten 12 ist in einem Feld eine LED-Anzeige 16 für die jeweils vorhandene Drehzahl des Bohrfutters 14 vorgesehen. Darunter befinden sich zwei Taster 17 für eine Erhöhung und Erniedrigung dieser Drehzahl und zwei Taster 18 für das Ausschalten und Einschalten der Bohrfutterdrehung. Es sind auch zwei Taster 19 für das Aufwärtsfahren und Abwärtsfahren des Spindelstockschlittens 12 und ein Notaus-Schalter 20 vorgesehen.

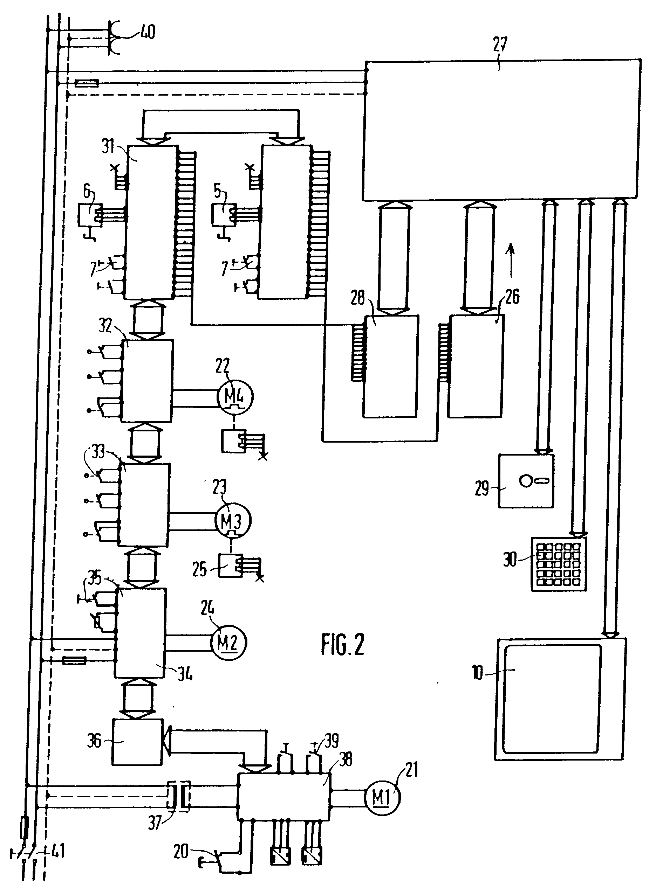

Gemäß dem Schaltschema in Fig. 2 sind ein Z-Antrieb 21 für den Spindelstockschlitten 12, ein Y-Antrieb 22 für die Rasteraufspannplatte 3 und ein X-Antrieb 23 für die Rasteraufspannplatte 3 vorgesehen. Weiterhin ist ein Bohrantrieb 24 für das Bohrfutter 14 vorgesehen. An die X- und Y-Antriebe 22, 23, die jeweils als Schrittmotoren ausgebildet sind, ist jeweils ein optoelektronischer Drehgeber zur Überwachung von Schrittmotoren angeschlossen. Die Steuerung der Antriebe 21, 22, 23 erfolgt von einer Steuereinrichtung 26 her, die einen Rechner 27 und einen Prozessor 28 pro Achse umfaßt. Der Rechner 27 ist an einen Massenspeicher 29, eine Tastatur 30 zum manuellen Eingeben von Daten und an den Bildschirm 10 angeschlossen. Zu der Steuereinrichtung 26 gehören zwei den Prozessoren nachgeschaltete Interfacekarten 31 für die Schrittmotorsteuerung. An die Interfacekarten 31 sind die elektrischen Handräder 5, 6 und die Taster 7 angeschlossen. Zu der Steuereinrichtung 26 gehören zwei Leistungskarten 32 für den Y-Antrieb 22 und den X-Antrieb und an die Leistungskarten 32 sind eine Reihe von Endschaltern 33 angeschlossen, welche die jeweilige Position der Rasteraufspannplatte 3 gegenüber dem ortsfesten Maschinengestell 1 anzeigen. Für den Bohrantrieb 24 ist eine Steuereinheit 34 vorgesehen, an die ein Taster 35 angeschlossen ist und die an eine Drehzahlregeleinheit 36 für den Bohrantrieb 24 angeschlossen ist. Über einen Transformator 37 wird eine Steuereinheit 38 gespeist, die für den Z-Antrieb 21, d.h. den Hub des Spindelstockschlittens 12 zuständig ist und an die zwei Taster 39 angeschlossen sind. Das Schaltschema ist vervollständigt durch einen Netzanschluß 40 und einen Hauptschalter 41.

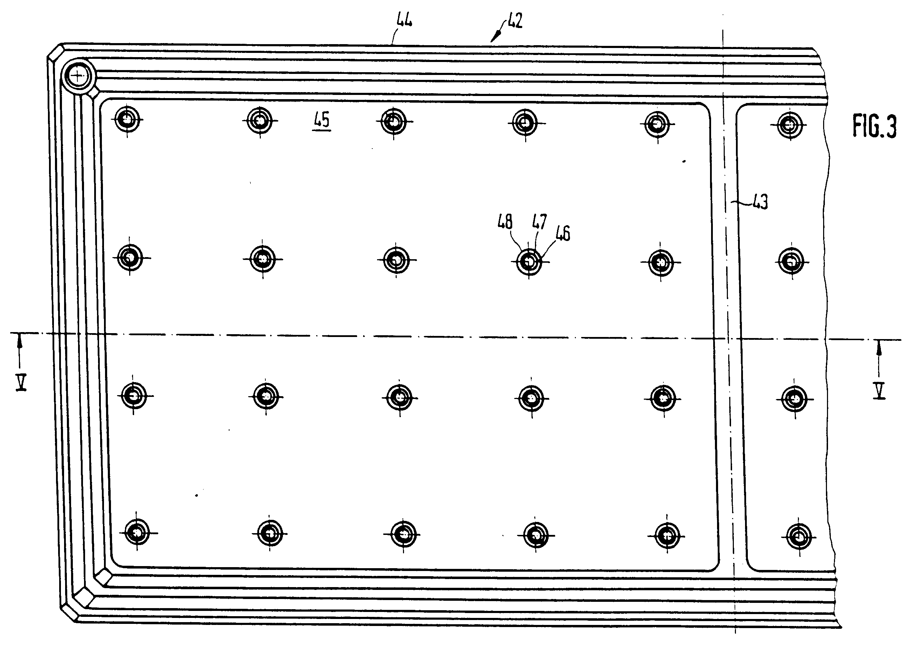

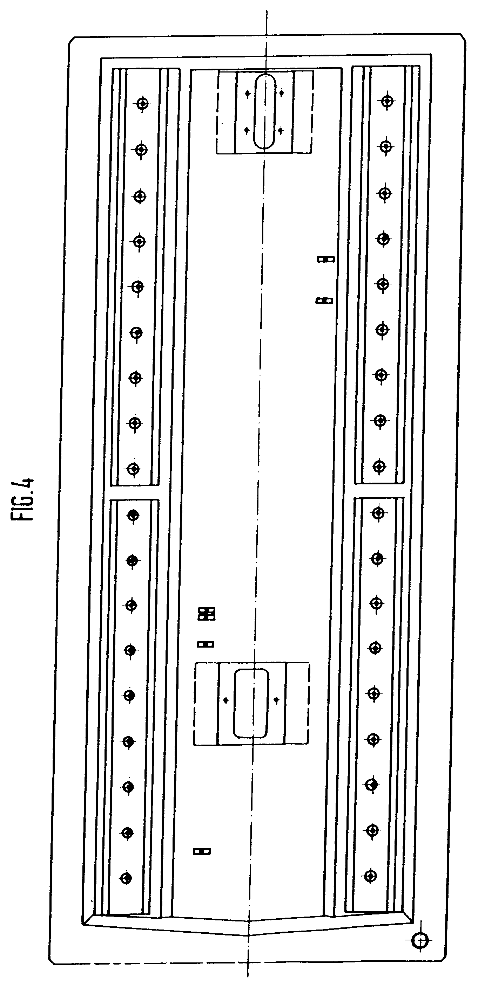

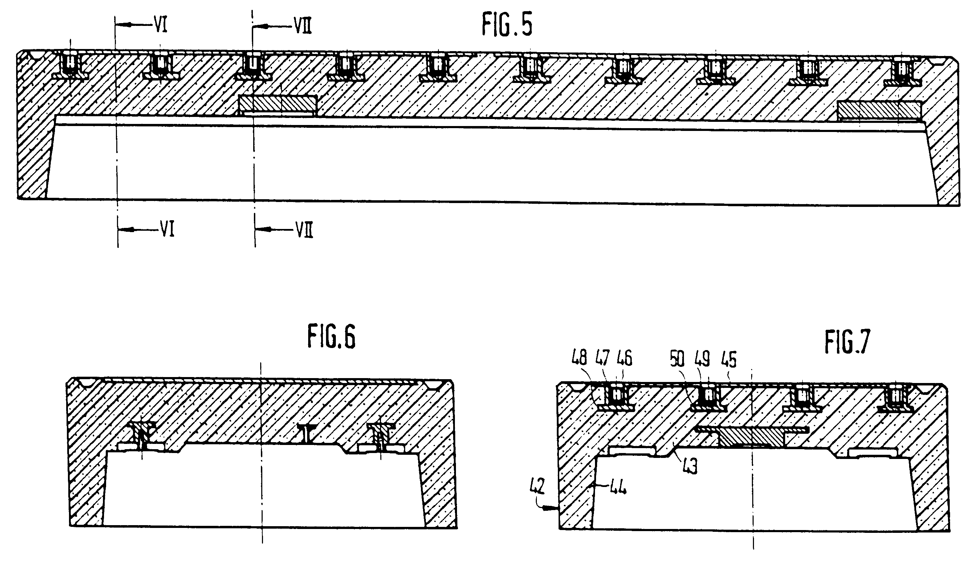

Die Rasteraufspannplatte 3 ist gemäß Fig. 3 bis 7 im wesentlichen ein Mineralguß-Korpus 42, der wannenartig ausgebildet ist und einen Deckbereich 43 und eine in sich geschlossene seitliche Wandung 44 bildet. Auf der ebenen Oberseite des Deckbereiches 43 ist eine zweiteilige Stahlplattenschicht 45 eingelegt, welche die Oberseite im wesentlichen abdeckt. Es sind vier Längs-Reihen von Aufnahme-Bohrungen 46 vorgesehen, wobei die Reihen jeweils gleichen Abstand voneinander haben. In jeder Reihe sind zehn Aufnahme-Bohrungen 46 vorgesehen, die jeweils den gleichen Abstand voneinander haben. Jede Aufnahme-Bohrung 46 ist von einer Aufnahme-Hülse 47 gebildet, die mit einem seitlich wegragenden, umlaufenden Sims 48 in die Stahlplattenschicht 45 eingebettet ist und im übrigen diese durchdringt und in den Mineralguß-Korpus 42 ragt. Dort ist sie in ein Mutterstück 48 geschraubt, das einen seitlich wegragenden, umlaufenden Sims 50 trägt, der von dem Korpus 42 aufgenommen ist. Das Innere der Aufnahme-Hülse 47 bildet oben eine zylindrische Aufnahme und daran anschließend nach einer stufigen Verringerung des Innendurchmessers ein Innengewinde. Ein nicht gezeigtes Spannelement ragt mit einem Hohlzapfen in die Aufnahme und wird mit einer durch den Hohlzapfen gesteckten Schraube in der Aufnahme-Hülse 49 festgeschraubt.

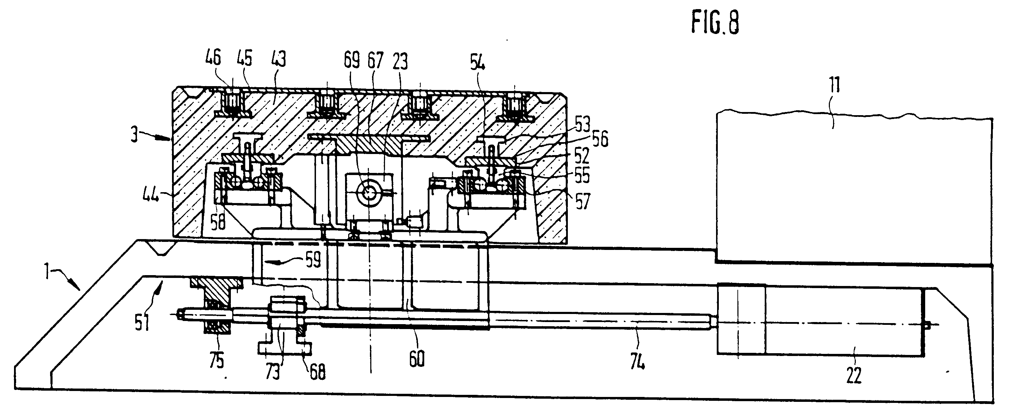

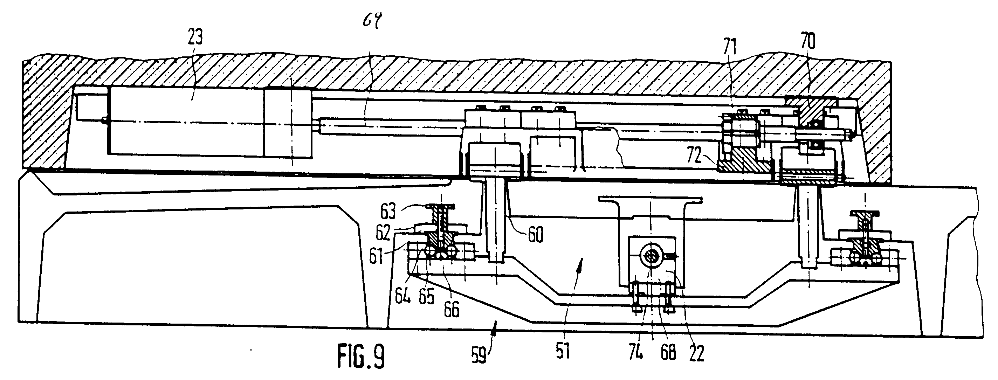

Durch Fig. 8 und 9 ist die Anbringung der Rasteraufspannplatte 3 am Gestell 1 verdeutlicht, das oben einen Maschinentisch 51 aufweist. An der Unterseite des Deckbereiches 43 sind in diesen zwei längsverlaufende Halteleiste 52 eingelassen, denen in den Deckbereich eingegossene, verankernde Muttern 53 mit Simsen 54 zugeordnet sind. An jede Halteleiste 52 ist von unten eine längliche Führungsaufnahme 55 angelegt, die von Schrauben 56 gehalten ist, die in die Muttern 53 geschraubt sind. Jede Führungsaufnahme 55 nimmt ein Paar von länglichen, stangenartigen, im Querschnitt runden Führungsschienen 57 auf. An jedem Paar von Führungsschienen 57 sind zwei auf Abstand voneinander angeordnete Gleitstücke 58 angesetzt, die Teile eines Kreuzkopfes 59 sind, der durch Aussparungen 60 des Maschinentisches 51 in das Gestell 1 hineintaucht. An der Unterseite des Maschinentisches 51 sind mit Abstand voneinander Halteleisten 61 mit Schrauben 62 und verankernden Muttern 63 befestigt und sind mittels der Schrauben Führungsaufnahmen 64 festgelegt, die Führungsschienen 65 aufnehmen. Mit je einem Paar dieser Führungsschienen 65 wirken je zwei auf Abstand voneinander angeordnete Gleitstücke 66 zusammen, die Bestandteile des Kreuzkopfes 59 sind. Die Rasteraufspannplatte 3 wird entlang den Führungsschienen 57 relativ zu dem Kreuzkopf 59 in ihrer Längsrichtung verschoben und entlang den Führungsschienen 65 relativ zum Gestell in ihrer Querrichtung verschoben.

An dem Deckbereich 43 ist unterseitig ein Ankerstück 67 eingelassen, das nahe der Wandung 44 angeordnet ist. An dem Ankerstück 67 ist der X-Antrieb 23 befestigt, der aus einem Motor und einem Getriebe besteht und eine Spindel 69 treibt, die am anderen Ende in einem Lagerbock 70 gelagert ist, der am Deckbereich 43 unterseitig nahe der Wandung 44 befestigt ist. Auf der Spindel 69 sitzt eine Kugelgewindemutter 71, die über einen Fuß 72 am Kreuzkopf 59 befestigt ist. Wenn der X-Antrieb 23 läuft, so bewegen sich die Kugelgewindemutter 71, der Kreuzkopf 59 und die Rasteraufspannplatte 3 in X-Richtung. An der Unterseite des Maschinentisches 51 ist seitlich angeordnet der Y-Antrieb 22 befestigt, der aus einem Motor und einem Getriebe besteht und eine Spindel 74 treibt, die am anderen Ende in einem Lagerbock 75 gelagert ist, der am Maschinentisch 51 unterseitig seitlich angeordnet befestigt ist. Auf der Spindel 74 sitzt eine Kugelgewindemutter 73, die über einen Fuß 68 am Kreuzkopf 59 befestigt ist. Wenn der Y-Antrieb 22 läuft, so bewegen sich die Kugelgewindemutter 73, das Kreuzstück 59 und die Rasteraufspannplatte 3 in Y-Richtung.

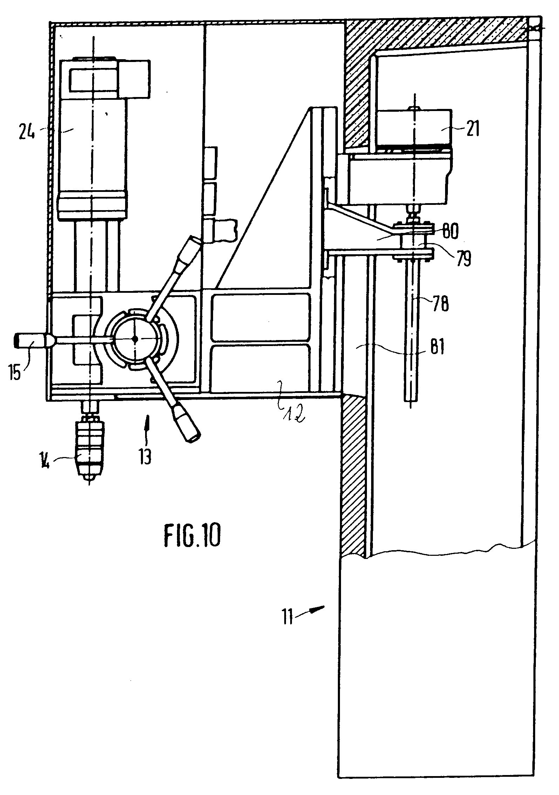

Gemäß Fig. 10 ist an dem Ständer 11 der Spindelstockschlitten 12 vorgesehen, der den Spindelstock 13 trägt, an dem das Bohrfutter 14 auf- und abverschiebbar gelagert ist, das mittels des Bohrantriebes 24 antreibbar ist. An dem Spindelstock 13 ist auch drehbar der Handhebel 15 gelagert, mittels dessen das Bohrfutter 14 relativ zum Spindelstock 13 von Hand auf- und abverstellbar ist. In dem Ständer 11 sitzt der mit einem Getriebe versehene Z-Antrieb 21, der eine vertikale Spindel 78 treibt, auf der eine Triebmutter 79 auf- und abwandern kann, die an einem Ausleger 80 des Spindelstockschlittens 12 sitzt. Der Ausleger 80 ragt durch eine Aussparung in den Ständer 11, der mit vertikalen Z-Führungsschienen 81 versehen ist, die nicht im einzelnen dargestellt sind und an denen der Spindelstockschlitten 12 und dessen Ausleger 80 geführt ist.

Es folgt nun eine Beschreibung des Arbeitsablaufes beim Zentrieren eines Werkstückes, bei dem das Spannmittel sowie die Koordinaten der zu zentrierenden Bohrungen unbekannt sind. Das verwendete Spannmittel ist eine Einrichtung zur Aufnahme eines Gußteiles. Die Einrichtung besitzt zwei Zentrierzapfen, wobei der eine Zapfen die Position, der andere die Ausrichtung bestimmt. Das Spannmittel ist der Maschine bzw. dem Rechner zunächst unbekannt und daher nicht in der Spannmitteldatei des Rechners. Für einen Arbeitsablauf wird die Maschine eingeschalten und wird eine Referenzfahrt durchgeführt. Das Spannmittel wird auf der Rasteraufspannplatte in einer für die folgende Bearbeitung günstige Position aufgespannt.

Auf dem Monitor des Rechners ist das Hauptmenu sichtbar. Der Bediener wählt über die Tastatur den Menupunkt "Spannmittel". Das Spannmittelmenu erscheint und der Punkt "Neues Spannmittel aufnehmen" wird selektiert. Die Steuerung fragt den Bediener nach dem "Namen" des Spannmittels, der Position des Positionsbolzens und der Position des Ausrichtungsbolzens. Nun fordert der Rechner den Bediener auf, den Spannmittelnullpunkt in X-Richtung anzutasten. Der Bediener spannt einen Kantentaster in das Bohrfutter, läßt die Spindel mit 500-600 Umdr. laufen und fährt die Vorrichtung mittels der Handräder in die entsprechende Position. Nachdem die Referenzkante angetastet wurde, bestätigt das der Bediener und gibt nach Aufforderung das Differenzmaß in X-Richtung zwischen Tastermitte und Werkstücknullpunkt ein. Für den Y-Wert des Werkstücknullpunktes wird sinngemäß verfahren. Das soeben vermessene Spannmittel ist jetzt der Steuerung bekannt und wird nach einer Korrekturoption in die Spannmitteldatei übernommen.

Nach der Übernahme ist das Hauptmenu wieder auf dem Monitor und mit dem Bearbeiten des Werkstückes kann begonnen werden. Der Bediener wählt "Koordinaten eingeben" und das Eingabemenu erscheint auf dem Bildschirm. Nachdem er "Eingabe Block" aufgerufen hat, wird die laufende Nummer des Koordinatensatzes angezeigt, mit der Frage nach dem ersten X-Wert. Es folgt der Y-Wert und die Bestätigung auf Korrektheit der beiden Angaben. Die nächste Koordinatensatznummer erscheint, bis der Bediener die Eingabe beendet. Nach einer möglichen Überprüfung der Werte wechselt der Bediener ins Bearbeitungsmenu und wählt, nachdem er das entsprechende Werkzeug und Werkstück eingespannt hat, den Menupunkt "schrittweise abarbeiten". Die Maschine fährt das Werkstück in Position gemäß des ersten Datensatzes. Der Bediener zentriert das erste Loch und bestätigt die Ausführung. Daraufhin bewegt die Maschine das Werkstück in die nächste Position, bis sämtliche Datensätze abgearbeitet sind. Das Werkstück ist nun fertig zentriert und wird ausgespannt. Es können nun weitere Werkstücke bearbeitet werden oder Bediener beendet das Bearbeiten. Bevor die Steuerung ins Hauptmenu wechselt, wird der Bediener gefragt, ob er den Datensatz speichern möchte. Bei einer positiven Entscheidung muß nun eine Kennzeichnung des Datensatzes vergeben werden, unter der dieser im nichtflüchtigen Speicher der Steuerung abgelegt wird. Das Spannmittel wird abgebaut und die Maschine steht für neue Bearbeitungen zur Verfügung.

Es folgt ein Arbeitsablauf beim Zentrieren eines Werkstückes, bei dem Spannmittel und Koordinatensatz der Steuerung bekannt sind. Es gelten die gleichen Voraussetzungen wie im vorhergehenden Beispiel. Der Bediener wählt im Hauptmenu den Punkt "Spannmittel" und das entsprechende Spannmittel an. Die Steuerung fragt den Bediener nach der Position des Positionsbolzens des gewählten Spannmittels. Daraufhin schlägt die Maschine die Position für den Richtungsbolzen vor. Der Bediener spannt das Spannmittel gemäß den Angaben auf die Rasteraufspannplatte und bestätigt das der Maschine. Das Hauptmenu erscheint und der Bediener ruft das "Koordinaten-Menu" auf. Unter dem Menu-Punkt "Daten einlesen" werden die für das Werkstück gespeicherten Datensätze in den Speicher gelesen. Nach einer möglichen Überprüfung der Datensätze wechselt der Bediener ins Bearbeitungsmenu. Das Werkzeug und das Werkstück werden eingespannt und unter dem Menupunkt "schrittweise abarbeiten" kann nun das Werkstück wie beim ersten Mal bearbeitet werden.

## Patentansprüche

1. Koordinatenbohrmaschine zum Zentrieren, bei der ein Spindelstock (13) und eine Aufspannplatte (3) mittels X-Führungsschienen sowie eines X-Antriebes (23) und Y-Führungsschienen sowie eines Y-Antriebes (22) in X-Richtung sowie in Y-Richtung gegeneinander verschiebbar sind, bei der die Aufspannplatte (3) von den Führungsschienen getragen ist, wobei diese unter der Aufspannplatte bei einem diese lagernden Maschinengestell (1) angeordnet sind, bei der im Spindelstock (13) ein Bohrfutter (14) aufgenommen ist und der Spindelstock (13) über einen Spindelstockschlitten (12) an einem an dem Maschinengestell angebrachten Ständer (11) mittels Z-Führungsschienen sowie eines Z-Antriebes (21) auf und ab bewegbar ist, bei der den Antrieben am Maschinengestell vorgesehene Handräder (5, 6) zugeordnet sind, und bei der vorgesehen sind eine Steuereinrichtung, Überwachungseinrichtungen mit Endschaltern zur Überwachung der Positionen von Aufspannplatte (3) und Spindelstock (13), eine Tasteneinrichtung (4) und ein Massenspeicher zum Laden und Speichern von Datenmengen, **dadurch gekennzeichnet**, daß das Bohrfutter (14) relativ zum Spindelstock (13) mittels eines Handhebels (15) auf und ab verstellbar ist, daß auf der Aufspannplatte (3) eine Rasterung von gleichen Abständen voneinander aufweisenden Reihen von Aufnahmebohrungen (46) für eine Nullpunktfeststellung vorgesehen ist, daß die Steuer- und Überwachungseinrichtung als Rechner (27) mit einem Prozessor (28) ausgebildet ist und die Handräder elektronische Handräder (5, 6) für den X-Antrieb (23) und den Y-Antrieb (22) und gegebenenfalls für den Z-Antrieb (21) sind, deren Vorgabewerte im Rechner (27) verarbeitet werden, und daß der Rechner (27) derart ausgebildet und programmiert ist, daß mittels der elektronischen Handräder (5, 6) die Rasteraufspannplatte (3) und der Spindelstock (13) in Bezug auf einen am Spindelstock vorgesehenen Taster bis zum Anschlag an einem Spannmittel, Anschlagmittel oder Werkstück verfahrbar sind und dem Rechner diese Position als relativer Nullpunkt des Spannmittels, Anschlagmittels bzw. Werkstückes lehrbar ist, und
daß er nach Eingabe der Art des Spannmittels, Anschlagmittels bzw. Werkstückes und des zugeordneten Referenzloches der Rasteraufspannplatte (3) den entsprechenden relativen Nullpunkt weiß und nach Eingabe der Koordinaten der gewünschten Zentrierbohrung in Bezug auf den relativen Nullpunkt die Rasteraufspannplatte (3) relativ zum Spindelstock (13) verfährt.

2. Koordinatenbohrmaschine nach Anspruch 1, **dadurch gekennzeichnet,** daß die Rasteraufspannplatte (3) einen Mineralguß-Korpus (42) umfaßt, der als nach unten offene Wanne ausgebildet ist und in den oben eine Stahlplattenschicht (45) aufgelegt ist.

3. Koordinatenbohrmaschine nach Anspruch 1 oder 2, **dadurch gekennzeichnet,** daß der maximale Hub des Spindelstockschlittens (12) am Ständer (11) größer ist als der maximale Hub des Bohrfutters (14) am Spindelstock (13).

4. Koordinatenbohrmaschine nach Anspruch 1, 2 oder 3, **dadurch gekennzeichnet,** daß eine mit dem einen Antrieb (23) versehene Spindel (69) unten an der Rasteraufspannplatte (3) gelagert ist und einen mit einer Mutter (71) versehenen Kreuzkopf (59) trägt, der über eine Mutter (73) von einer zur ersten Spindel (69) rechtwinkeligen, mit dem anderen Antrieb (22) versehenen Spindel (74) getragen ist, die am Gestell (1) gelagert ist.

5. Koordinatenbohrmaschine nach einem der vorhergehenden Ansprüche, **dadurch gekennzeichnet,** daß pro Aufnahmebohrung (46) eine Aufnahme-Hülse (47), die in die Stahlplattenschicht (45) seitlich eingreift, in dem Mineralguß-Korpus (42) mit einem Außengewinde in ein Mutterstück (49) geschraubt ist, das in den Mineralguß-Korpus (42) seitlich eingreift.

6. Koordinatenbohrmaschine nach einem der vorhergehenden Ansprüche, **dadurch gekennzeichnet,** daß die Rasteraufspannplatte (3) an der Unterseite Halteleisten (52, 61) trägt, die an dem Mineralguß-Korpus (42) mittels Ankerstücken (53, 63) festgelegt sind, die mit Gewindebohrungen versehen sind.

## Claims

1. Coordinate drilling machine for centring, in which a drill head (13) and a clamping plate (23) are displaceable with respect to one another in the X direction and in the Y direction by means of X guiderails and an X drive (23) and Y guiderails and a Y drive (22), in which the clamping plate (3) is carried by the guiderails, these being arranged under the clamping plate on a machine frame (1) bearing the latter, in which a drill chuck (14) is received in the drill head (13) and the drill head (13) is movable up and down by way of a drill head carriage (12) on a stand (11) mounted on the machine frame, by means of Z guiderails and a Z drive, in which handwheels (5, 6) provided on the machine frame are associated with the drives, and in which there are provided a control device, monitoring devices having limit switches for monitoring the positions of clamping plate (3) and drill head (13), a key device (4) and a mass store for loading and storing quantities of data, characterized in that the drill chuck (14) is displaceable up and down relative to the drill head (13) by means of a manual lever (15), in that a grid arrangement of rows of receiving bores (46) for determining a zero point which have equal spacings from one another is provided on the clamping plate (3), in that the control and monitoring device is constructed as a computer (27) with a processor (28) and the handwheels are electronic handwheels (5, 6) for the X drive (23) and the Y drive (22) and if applicable for the Z drive (21), whereof the default values are processed in the computer (27), and in that the computer (27) is constructed and programmed such that the grid-type clamping plate (3) and the drill head (13) are movable by means of the electronic handwheels (5, 6) with reference to a keypad provided on the drill head until they bear against a clamping means, stop means or workpiece and this position can be instructed to the computer as being a relative zero point of the clamping means, stop means or workpiece, and in that after the type of clamping means, stop means or workpiece and the associated reference hole of the grid-type clamping plate (23) have been input the computer knows the corresponding relative zero point and after the coordinates of the desired centring bore with reference to the relative zero point have been input it moves the grid-type clamping plate (3) relative to the drill head (13).

2. Coordinate drilling machine according to Claim 1, characterized in that the grid-type clamping plate (3) comprises a mineral cast body (42) which is constructed as a downwardly open trough end into which a steel plate layer (45) is placed on at the top.

3. Coordinate drilling machine according to Claim 1 or 2, characterized in that the maximum stroke of the drill head carriage (12) on the stand (11) is larger than the maximum stroke of the drill chuck (14) on the drill head (13).

4. Coordinate drilling machine according to Claim 1, 2 or 3, characterized in that a spindle (69) provided with the one drive (23) is mounted on the grid-type clamping plate (3) at the bottom and carries a crosshead (59) which is provided with a nut (71) and which is carried by way of a nut (73) by a spindle (74) which is at a right angle to the first spindle (69), is provided with the other drive (22) and is mounted on the frame (1).

5. Coordinate drilling machine according to one of the preceding claims, characterized in that for every receiving bore (46) a receiving sleeve (47), which engages laterally in the steel plate layer (45), is screwed into a nut element (49) in the mineral cast body (42) by means of an external thread, and this nut element engages laterally in the mineral cast body (42).

6. Coordinate drilling machine according to one of the preceding claims, characterized in that the grid-type clamping plate (3) carries on the underside holding strips (52, 61) which are fixed to the mineral cast body (42) by means of anchoring pieces (53, 63) which are provided with threaded bores.

## Revendications

1. Machine à percer à coordonnées pour le centrage, dans laquelle une poupée porte-broche (13) et un plateau de fixation (3) peuvent être déplacés l'un par rapport à l'autre dans la direction X ainsi que dans la direction Y, au moyen de rails de guidage X ainsi que d'un entraînement X (23), et de rails de guidage Y ainsi que d'un entraînement Y (22) ; dans laquelle le plateau de fixation (3) est porté par des rails de guidage, les rails de guidage étant agencés sous le plateau de fixation dans un bâti de machine (1) qui supporte celui-ci ; dans laquelle un mandrin (14) est monté dans la poupée porte-broche (13), et la poupée porte-broche (13) peut être déplacée en montant et descendant sur un montant (11) placé dans le bâti de machine (1) par un chariot porte-broche (12) au moyen de rails de guidage Z ainsi que d'un entraînement Z (21) ; dans laquelle des volants à main (5, 6) prévus dans le bâti de machine (1) sont associés aux entraînements ; et dans laquelle sont prévus un dispositif de commande, des dispositifs de surveillance avec des commutateurs de fin de course pour la surveillance des positions du plateau de fixation (3) et de la poupée porte-broche (13), un dispositif à touches (4) et une mémoire de masse pour le chargement et la mémorisation de flux de données, caractérisée en ce que le mandrin (14) peut être déplacé en montant et descendant par rapport à la poupée porte-broche (13) au moyen d'un levier à main (15), en ce que sur le plateau de fixation (3) est prévue une trame présentant des rangées de perçages récepteurs (46) à distance égale les unes des autres pour une détection du point zéro, en ce que le dispositif de commande et de surveillance est réalisé sous la forme d'un ordinateur (27) avec un processeur (28) et que les volants à main sont des volants à main électroniques (5, 6) pour l'entraînement X (23) et l'entraînement Y (22) et éventuellement pour l'entraînement Z (21), dont les valeurs prédéterminées sont traitées dans l'ordinateur (27), et en ce que l'ordinateur (27) est réalisé et programmé de telle sorte que le plateau de fixation à trame (3) et la poupée porte-broche (13) peuvent être déplacés par rapport à des détecteurs prévus sur la poupée porte-broche au moyen des volants à main électroniques (5, 6) jusqu'en butée contre un organe de serrage, une pièce de butée ou une pièce à usiner et que l'on peut enseigner à l'ordinateur cette position en tant que point zéro relatif de l'organe de serrage, de la pièce de butée ou de la pièce à usiner, et en ce qu'après lui avoir communiqué le type de l'organe de serrage, de la pièce de butée ou de la pièce à usiner et du trou de référence associé du plateau de fixation à trame (3), il connaît le point zéro relatif correspondant et, qu'après avoir entré les coordonnées du perçage centré désiré par rapport au point zéro relatif, il déplace le plateau de fixation à trame (3) par rapport à la poupée porte-broche (13).

2. Machine à percer à coordonnées selon la revendication 1, caractérisée en ce que le plateau de fixation à trame (3) comporte un corps en fonte minérale (42) qui est réalisé sous la forme d'une cuve ouverte vers le bas et dans lequel est posée en haut une couche de plateau en acier (45).

3. Machine à percer à coordonnées selon l'une ou l'autre des revendications 1 et 2, caractérisée en ce que la course maximale du chariot porte-broche (12) sur le montant est supérieure à la course maximale du mandrin (14) sur la poupée porte-broche (13).

4. Machine à percer à coordonnées selon l'une quelconque des revendications 1, 2 et 3, caractérisée en ce qu'une broche (69) pourvue d'un des entraînements (23) est montée en bas sur le plateau de fixation à trame (3) et porte une tête transversale (59) pourvue d'un écrou (71), qui est portée via un écrou (73) par une broche (74), montée dans le bâti (1) en angle droit par rapport à la première broche (69) et pourvue de l'autre entraînement (22).

5. Machine à percer à coordonnées selon l'une quelconque des revendications précédentes, caractérisée en ce que pour chaque perçage récepteur (46) est prévue une douille de réception (47), s'engageant latéralement dans la couche de plateau en acier (45), ladite douille étant vissée dans le corps en fonte minérale (42) par un filetage dans une partie formant écrou (49) qui s'engage latéralement dans le corps en fonte minérale (42).

6. Machine à percer à coordonnées selon l'une quelconque des revendications précédentes, caractérisée en ce que le plateau de fixation à trame (3) porte du côté inférieur des liteaux de retenue (52, 61) qui sont fixés dans le corps en fonte minérale (42) au moyen d'éléments d'ancrage (53, 63) qui sont pourvus de perçages taraudés.
